# EUROPÄISCHE PATENTSCHRIFT

(11) **EP 2 912 653 B1**
(45) Veröffentlichungstag und Bekanntmachung des Hinweises auf die Patenterteilung: **09.06.2021**
(21) Anmeldenummer: 13782674.9
(22) Anmeldetag: 17.10.2013
(51) Int. Cl.: G09F 21/04, G09F 19/14, G09F 19/18

(54) **VERFAHREN ZUR RICHTUNGSABHÄNGIGEN SIGNALISIERUNG**
METHOD FOR DIRECTIONALLY DEPENDENT SIGNALLING
PROCÉDÉ DE SIGNALISATION DÉPENDANTE DE LA DIRECTION

(30) Priorität: 25.10.2012 DE 102012219573
(43) Veröffentlichungstag der Anmeldung: 02.09.2015
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2013/071678
(87) Internationale Veröffentlichungsnummer: WO 2014/063977

(56) Entgegenhaltungen:
- WO-A1-03/049072
- DE-A1-102006 050 548
- FR-A1- 2 949 725

## Beschreibung

Die Erfindung betrifft ein Verfahren zur richtungsabhängigen Signalisierung durch ein Fahrzeug und eine Vorrichtung zu demselben Zweck.

Heutzutage sind die Möglichkeiten der optischen Kommunikation von Verkehrsteilnehmern untereinander basierend auf technischen Hilfsmitteln beschränkt. Diese umfassen im Wesentlichen die Nutzung von Blinkern sowie dem Fernlicht.

Vereinzelt verfügen Spezialfahrzeuge oder Einsatzfahrzeuge über gewöhnliche Anzeigetafeln, die kurze Texte oder Zeichen wie "Bitte folgen." darstellen können. Das Dokument FR2949725A ist als nächstliegender Stand der Technik angesehen, und es offenbart alle Merkmale in dem Oberbegriff des Anspruchs 1.

Die Aufgabe an den Erfinder ist die Verbesserung der technischen Hilfsmittel mit denen anderen Verkehrsteilnehmern Botschaften übermittelt werden können.

Die Aufgabe wird durch ein Verfahren zur richtungsabhängigen Signalisierung insbesondere durch ein Fahrzeug nach Anspruch 1 und eine Vorrichtung zu demselben Zweck nach Anspruch 16 gelöst.

In einem Aspekt 1 umfasst ein Verfahren zur richtungsabhängigen Signalisierung insbesondere durch ein Fahrzeug: Anzeigen von zwei oder mehreren graphischen Botschaften vom selben Fahrzeugbereich nach außen; wobei für jede graphische Botschaft ein Raumwinkel existiert, aus dem nur die jeweilige grafische Botschaft sichtbar ist, nicht aber die andere beziehungsweise anderen grafischen Botschaften; wobei sich die Raumwinkel der graphischen Botschaften zumindest in einem Winkelparameter unterscheiden.

Auf diese Weise kann jeder Verkehrsteilnehmer (andere Fahrer, Fußgänger, Zweitradfahrer) beim Blick auf das Fahrzeug speziell für ihn bestimmte Botschaften (Fahrzeugsignale, Symbole) sehen. Jedem Verkehrsteilnehmer kann eine grafische Botschaft angezeigt bekommen, die auf ihn zugeschnitten ist, ohne dass er andere grafische Botschaften wahrnehmen könnte. Somit entstehen sehr viel weniger Missverständnisse, sowie weniger Überreizung unbeteiligter Verkehrsteilnehmer durch für sie nicht relevante Informationen. So kann das Fahrzeug, z.B. auch bei einer automatisch veranlassten Vollbremsung rechtzeitig ein Signal speziell in Richtung weiterer Fahrzeuge anzeigen, um mögliche Folgen dieses Eingriffs zu minimieren. Für andere Verkehrsteilnehmer entstehen keine Nebenwirkungen. Die weiteren Verkehrsteilnehmer werden durch für sie nicht bestimmte grafische Botschaften nicht abgelenkt und unterliegen auch nicht der Möglichkeit eine grafische Botschaft falsch zu interpretieren, da sie sie nicht sehen. Das Verfahren lässt sich alternativ oder zusätzlich zu den gesetzlich vorgeschriebenen Anzeigemitteln wie Leuchten oder Blinker realisieren. Insbesondere ist zumindest eine grafische Botschaft bei einem direkten Blick auf die Fahrzeugoberfläche, insbesondere auf einen an sich nichtdurchsichtigen Bereich des Fahrzeugs, von außen sichtbar.

Es werden unterschiedliche grafische Botschaften für unterschiedliche Richtungen angezeigt. Der Hauptvorteil ist dabei, dass Verkehrsteilnehmer, die sich in bestimmten Richtungen zum Fahrzeug befinden, z.B. im Blindspot-Bereich, auf derselben Spur, auf anderen Spuren, in einer Einfahrt, etc., eine für ihre Position angemessene grafische Botschaft angezeigt bekommen. Somit kann die Störung oder Irritation weiterer Verkehrsteilnehmer vermieden werden, die von einer Warnung oder Information nicht betroffen sind oder die eine andere Information erhalten sollen.

Vorteilhaft ist weiterhin, dass jede graphische Botschaft von der ganzen Größe der sie anzeigenden Anzeige profitieren kann. Durch das Verfahren ist eine intuitive Kommunikation mit anderen Verkehrsteilnehmern möglich. Durch Selektivität der Richtung ist das Verfahren z.B. im Vergleich mit sonstigen Lichtern und Signalvorrichtungen energetisch vorteilhaft! Was die CO2 Bilanz verbessert und umweltfreundlich ist.

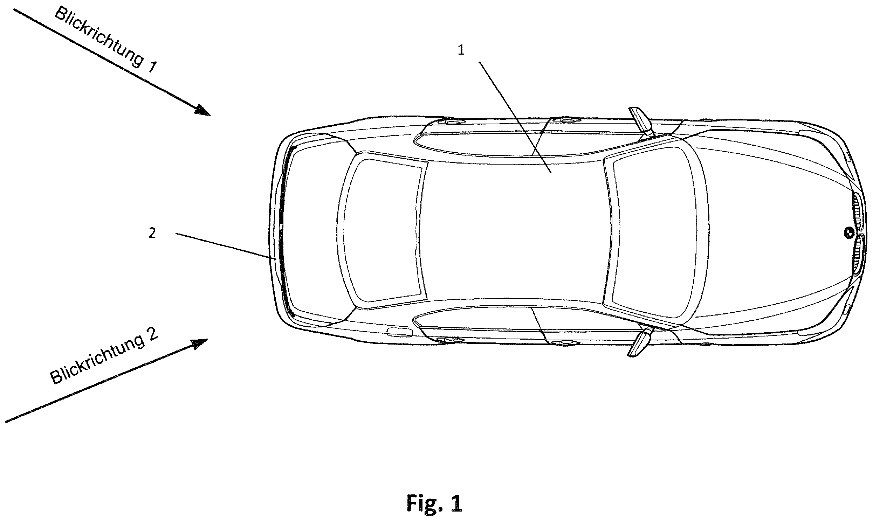

Fig. 1 zeigt schematisch ein Fahrzeug 1 mit einer Anzeige 2, die dazu eingerichtet ist, eine erste Botschaft derart anzuzeigen, dass ein anderer erster Verkehrsteilnehmer, der die Blickrichtung 1 auf die Anzeige 2 hat, die erste Botschaft wahrnehmen kann. Gleichzeitig ist die Anzeige 2 ebenfalls dazu eingerichtet, eine zweite Botschaft derart anzuzeigen, dass ein anderer zweiter Verkehrsteilnehmer, der die Blickrichtung 2 auf die Anzeige hat, die zweite Botschaft wahrnehmen kann. Die Anzeige der ersten Botschaft ist jedoch so, dass der zweite Verkehrsteilnehmer sie nicht wahrnehmen kann. Ebenso kann der erste Verkehrsteilnehmer die zweite grafische Botschaft nicht wahrnehmen.

Die Raumwinkel ist insbesondere über folgende Winkelparameter bestimmt:
- begrenzender Winkel im Uhrzeigersinn **ϕ₁**
- begrenzender Winkel gegen Uhrzeigersinn **ϕ₂**
- begrenzender Winkel noch oben **θ₁**
- begrenzender Winkel nach unten **θ₂**

Alternativ können diese auch z.B. mittels eines zentralen, für die Ausrichtung eines Winkelbereichs kennzeichnenden Winkels und/oder eines für die Ausdehnung des Raumwinkels kennzeichnenden, insbesondere eines vertikalen, horizontalen oder radialen Öffnungswinkels bestimmt bzw. beschrieben werden. Die Winkel können in einem polaren oder kugelförmigen Koordinatensystem verstanden werden, wobei der Koordinatenursprung insbesondere in dem Fahrzeugbereich oder im Inneren des Fahrzeugs hinter dem Fahrzeugbereich oder aus dem von der Fahrzeugoberfläche abgegrenztem Bereich hinausgehend befinden kann.

Zumindest ein, zwei oder mehrere Raumwinkel können zumindest teilweise überlappende geometrische Bereiche umfassen. Unterschiede können insbesondere eine Winkelabweichung von mindestens 5°, 10°, 15°, 30°, 45°, 60°, 90°, 120°, insbesondere in horizontale Richtung umfassen und/oder 3°, 5°, 10°, 30° in die vertikale Richtung umfassen.

Unter einem Fahrzeugbereich wird insbesondere eine gerade oder gekrümmte Oberfläche des Fahrzeugs und/oder ein Bereich des Fahrzeugs verstanden. Der Fahrzeugbereich befindet sich auf einer Seite des Fahrzeugs (z.B. Heck, Seite, Ecke, Rundung) und ist im Wesentlichen in eine Richtung ausgerichtet, insbesondere derart, dass die resultierende Krümmung der Oberfläche innerhalb des Fahrzeugbereiches höchstens 6°, 10°, 14°, 25° umfasst. Die Fahrzeugoberfläche kann als ein Designelement oder Funktionselement des Fahrzeugs ausgestaltet sein oder solche Elemente beinhalten.

Ein Fahrzeugbereich kann eine Heckpartie, Motorhaube, Leuchte, Seitentür, Windschutzscheibe, Säule, Radkappe eines Fahrzeugs sein oder im Bereich dieser Teile verbaut sein.

Die grafischen Botschaften können voneinander verschieden sein. Ein Fahrzeug, welches sich beispielsweise im Blind-Spot befindet, bekommt die grafische Botschaft in Form einer konkreten Information, dass es jetzt weniger gut gesehen werden kann angezeigt, während die direkt hinterherfahrenden Fahrzeuge die grafische Botschaft angezeigt bekommen, dass das Fahrzeug in 100 Metern die Spur wechseln wird, noch bevor der Fahrer "offiziell und verbindlich" geblinkt hat. Dies gleichzeitig und mittels derselben Anzeigevorrichtung möglich. Die verschiedenen graphischen Botschaften können nicht nur quantitative Unterschiede aufweisen, wie eine stärkere Beleuchtung oder etwa eine andere Farbe oder einen anderen Farbverlauf, sondern im Wesentlichen inhaltlich verschieden sein. Insbesondere können diese auch unterschiedliche numerische Informationen, z.B. Abstandsinformationen beinhalten.

Denkbar ist auch, dass eine im Wesentlichen ähnliche oder dieselbe grafische Botschaft in zumindest zwei Richtungen angezeigt wird, die sich dennoch in ihrem Inhalt und/oder in dem Zeitraum in dem diese dargestellt wird, in der zeitlichen Reihenfolge bzw. Sequenz (bei mehreren grafischen Botschaften für selbe Richtung) unterscheidet.

In einer speziellen Variante zur richtungsabhängigen Signalisierung wird eine erste grafische Botschaft derart von einem Fahrzeugbereich nach außen angezeigt, dass diese vollständig nur aus einem ersten Raumwinkel sichtbar ist und eine zweite grafische Botschaft derart von dem selben Fahrzeugbereich nach außen angezeigt wird, dass diese vollständig nur aus einem zweiten Raumwinkel sichtbar ist und eine dritte grafische Botschaft von dem selben Fahrzeugbereich nach außen angezeigt wird, dass diese vollständig nur aus einem dritten Raumwinkel sichtbar ist, wobei sich der erste, der zweite und der dritte Raumwinkel jeweils voneinander unterscheiden.

In einer Weiterbildung unterscheiden sich zumindest zwei graphische Botschaften zumindest teilweise in ihrem Inhalt oder dem Zeitraum, in dem sie angezeigt werden. Der Inhalt zumindest einer grafischen Botschaft kann fortlaufend, insbesondere in Abhängigkeit von vorausbestimmten Kriterien, neu bestimmt werden.

Zumindest eine grafische Botschaft kann auch aus einer Sequenz von grafischen Botschaften zusammengesetzt sein, wobei die Reihenfolge von grafischen Botschaften in einer Sequenz, z.B. logische und/oder kausale und/oder räumliche Zusammenhänge, insbesondere im Bezug auf die aktuelle Verkehrssituation bzw. Anordnung von Objekten veranschaulicht.

Die grafischen Botschaften können auch quantitative Unterschiede (wie Leuchtstärke) aufweisen. Die Größen zumindest zweier grafische Botschaften und/oder die Proportionen zwischen einzelnen Teilen zumindest zweier grafischer Botschaften, die in unterschiedliche Richtungen angezeigt werden, können unterschiedlich sein.

In einer Weiterbildung unterscheiden sich zumindest zwei graphische Botschaften in der Größe, in der sie angezeigt werden, in den Proportionen und/oder in den Proportionen von Einzelteilen der grafischen Botschaften voneinander.

Somit können andere Verkehrsteilnehmer, die auf das Fahrzeug aus ihrer jeweiligen Richtung schauen, für sie geometrisch und/oder im Bezug auf Proportionen der Einzelteile der Grafik angepasste Botschaften sehen. Beispielsweise kann für ein Fahrzeug auf der Nachbarspur kann eine Text-oder Symbolbotschaft in einer subjektiv gesehenen Größe von ca. 40 cm dargestellt sein. Eine Botschaft für ein hinterherfahrendes Fahrzeug im Abstand von 50 Meter kann - auch wenn dies dieselbe Botschaft sein sollte - Inhaltlich auf das Wesentliche komprimiert sein und zugleich zumindest einzelne Elemente größer dargestellt werden, z.B. subjektiv 70 cm, damit diese auch aus der Distanz immer noch gut genug wahrnehmbar sind.

In einer anderen Weiterbildung kann eine oder können mehrere grafische Botschaften, ein Symbol, Text, eine Kontur (insbesondere Objektkontur), eine oder mehrere mit einer oder mehreren Texturen gefüllte Fläche oder Flächen, umfassen.

Eine oder zwei graphische Botschaften werden zumindest aufbauend auf einer mit Mitteln des Fahrzeug erfassten Umgebungskarte erstellt; und/oder werden zumindest eine oder zwei graphische Botschaften aufbauend auf einer aus der Umgebung des Fahrzeugs aufgenommenen Bildfolge erstellt, wobei zumindest eine Bildfolge, oder Umgebungskarte mit Mitteln der Bildverarbeitung aufbereitet wird.

Die grafische Botschaft kann auch als ein Video aus der Umgebung ausgestaltet sein. Zur besseren Wahrnehmbarkeit durch Verkehrsteilnehmer handelt es sich dabei um eine mit Mitteln des Fahrzeugs speziell aufbereitete Bildfolge. Vorteilhafterweise werden dabei die Kanten aus der Bildfolge, die mit einer Fahrzeugkamera oder einem anderen Fahrzeugsensor erfasst wird, mittels an sich bekannter Verfahren verstärkt und/oder nachgezeichnet, die Kontraste werden in der Bildfolge erhöht, Zumindest ein Teil der Bildflächen wird mit künstlich erzeugten Texturen gefüllt.

Somit ist die Bildfolge auch bei eher ungünstigen Lichtverhältnissen gut sichtbar. Die Bildfolge kann auch abstrahiert und/oder zumindest teilweise durch Symbole ersetzt und/oder mit Informationen aus dem Navigationssystem des Fahrzeugs angereichert werden. Auch ist die Darstellung eines Ausschnitts aus einer Navigationskarte oder Teile dieser, die sich auf die aktuelle Umgebung und/oder die Umgebung der Fahrzeugroute, die in der nahen Zukunft befahren wird, beziehen, vorteilhaft. Somit weiß der Verkehrsteilnehmer, der aus einer bestimmten Richtung kommt, z.B. welche Ausfahrt im Kreisverkehr das Fahrzeug nehmen wird, etc. Vorteilhafterweise kann die grafische Botschaft auch das Markenemblem und/oder das Markenzeichen und/oder Teile der Corporate Identity enthalten. Dies bietet eine sehr einprägsame Werbung und Imageverbesserung.

In einer Weiterbildung wird das Anzeigen mithilfe einer Anzeige ausgeführt, die Mikroprismen, Mikrolinsen oder Lentikuläre optische Elemente umfasst.

Eine einfachste und hinreichend effektive Realisierung der Anzeige besteht in der Nutzung der TFT-Displaytechnologie zusammen mit einer Lentikulärtechnologie (Wackelbildtechnologie). Bei dieser kann es sich z.B. um eine Prismen- oder Zylinderoptikfolie handeln, welche die Abbildung von bestimmten Pixeln in eine andere Richtung lenkt als die Abbildung von anderen bestimmten Pixeln des Displays. Durch die Ansteuerung bestimmter Pixel des Displays kann eine Abbildung für eine vorausbestimmte Richtung erzeugt werden (diese wird zusammengestellt aus den in diese Richtung abgelenkten Pixellichtern), sodass diese von anderen Verkehrsteilnehmer als eine im Wesentlichen zusammenhängende Grafik wahrgenommen wird.

Zwei oder mehrere grafischen Botschaften können auch mit zeitlichen Unterbrechungen, insbesondere alternierend, z.B. abwechselnd, nacheinander, angezeigt werden.

Vorteilhafterweise werden dabei die zwei oder mehrere Botschaften zumindest teilweise mittels derselben Pixel oder Leuchtmittel erzeugt. Diese werden dabei je nach Reihenfolge der Darstellung für die eine oder die andere grafische Botschaft angesteuert.

Die Zeitintervalle können dabei derart gewählt werden, dass der Beobachter das schnelle Ein- und Ausschalten zumindest einer grafischen Botschaft nicht merkt. Z.B. können so zwei Beobachter aus zwei Richtungen jeweils die für sie bestimmten grafischen Botschaften permanent eingeblendet sehen. Dies ist in etwa mit der Wirkung von Videosequenzen vergleichbar, welche aus Einzelbildern bzw. einem Nachleuchten bestimmter Bildschirmbereiche bestehen, aber vom Beobachter als zusammenhängend und nicht etwa aufblitzend wahrgenommen werden.

Eine solche Anzeigevorrichtung kann z.B. in einen Teil der Fahrzeugoberfläche oder sichtbar bzw. durchscheinend unter die Fahrzeugoberfläche verbaut sein. Alternativ kann die Anzeigevorrichtung als eine Projektion (z.B. ähnlich einem Beamer) ausgestaltet sein der insbesondere hinter einer Prismen- und/oder Zylinderoptikschicht verbaut ist. Das Prinzip der Darstellung und der Richtungsabhängigkeit kann dabei wie oben beschrieben sein. Besonders vorteilhaft ist eine solche Ausgestaltung, bei der die Oberfläche des Fahrzeugs, hinter welcher die Anzeigevorrichtung verbaut ist, aus einer bestimmten Richtung als eine opake Oberfläche erscheint, wenn in dieser Richtung zu der Zeit keine grafische Botschaft Richtung dargestellt wird.

Die grafischen Botschaften können insbesondere mittels einer richtungsabhängigen Aussendung einer bestimmten Lichtmenge erzeugt werden, wobei diese in vielen unterschiedlichen Richtungen unterschiedliche Lichtwerte besitzt, so dass diese zur Erzeugung eines Eindrucks einer grafischen Botschaft beim Beobachter ausreichen, der sich im entsprechenden Raumwinkel befindet. Es nehmen die Lichteigenschaften der Strahlen, die eine grafische Botschaft bilden, z.B. in mindestens 500, 1000, 5000 verschiedenen Richtungen, innerhalb des Raumwinkels unterschiedliche Werte zur selben Zeit oder in einem sehr kurzen Zeitintervall an.

Die Leistung, insbesondere die Lichtleistung die die Anzeigevorrichtung aussendet kann im Betrieb durchschnittlich unter 100, 200, 400, 800 Im (Lumen) betragen. Bereits diese Leistung kann ausreichen, um die erforderliche Information an andere Verkehrsteilnehmer mittels grafischer Botschaften zu kommunizieren. Somit ist eine sehr viel geringere Leistung und geringer Energieverbrauch erforderlich als bei Vorrichtungen, die etwa einer selektiven Ausleuchtung der Umgebung oder einer Signalisierung durch eine Ausleuchtung umgebender Objekte dienen.

Alternativ oder zusätzlich können in der Anzeigevorrichtung zur Erzeugung grafischer Botschaften andere Technologien, insbesondere Lasertechnologien, eingesetzt sein. Diese können ein z.B. nur aus einer Richtung sichtbares Muster, z.B. unter Nutzung der Interferenzeigenschaften des kohärenten Laserlichts und/oder mittels Nutzung einer Maske, die bestimmte Teile des eingestrahlten Lichts nur aus bestimmten Richtung sichtbar macht, erzeugen.

Alternativ oder zusätzlich kann das Verfahren mittels einer, insbesondere lokal unterschiedlicher Beeinflussung von Lichtabsorptions- oder Lichtbrechungseigenschaften, erfolgen.

Das Verfahren kann derart ausgestaltet sein, dass zumindest zwei grafische Botschaften mittels Beeinflussung von Lichtabsorptions- oder Lichtbrechungseigenschaften erzeugt werden. Zum Beispiel kann das Verfahren als eine Kombination aus optischer Vorrichtung, die den Strahlengang Ort- oder Winkelspezifisch beeinflusst und einem oder mehrerer Elemente ausgestaltet sein, die Lichtabsorptionseigenschaften und/oder Lichtreflexionseigenschaften aufweisen. Die Beeinflussung der Lichtabsorptionseigenschaften und/oder Lichtreflexionseigenschaften und/oder Interferenzeigenschaften kann dabei eine lokale Ortsabhängigkeit aufweisen. Dabei bildet sich die grafische Botschaft, die in einen Raumwinkel angezeigt wird, als Muster aus unterschiedlich stark reflektiertem Licht und/oder aus unterschiedlich stark absorbiertem Licht aus. Dabei kann es sich insbesondere um das Licht, welches im Wesentlichen aus dem entsprechenden Raumwinkel kommt, handeln. Anders formuliert: Es kann auch das Licht von den Leuchten eines anderen Verkehrsteilnehmers sein, dem die grafische Botschaft angezeigt wird. Die Lichtquelle des anderen Verkehrsteilnehmers liefert das für die Anzeige benötige Licht, was insbesondere durch Reflexion erreicht wird. Alternativ können andere Technologien, insbesondere Lasertechnologien eingesetzt werden.

In einer anderen Weiterbildung erscheinen mindestens zwei graphische Botschaften an derselben Position im Raum, die insbesondere nicht mit der Fahrzeugoberfläche übereinstimmt.

In einer weiteren Weiterbildung verändert sich zumindest ein Raumwinkel, insbesondere während der Ausführung des Verfahrens zumindest in einem Winkelparameter, insbesondere in Abhängigkeit von der Bestimmung der Winkelparameter mit Mitteln des Fahrzeugs.

Zumindest ein Raumwinkel, insbesondere zumindest ein Winkelparameter des Raumwinkels, und/oder die Entfernung von der die grafische Botschaft sichtbar ist, kann mit oder ohne Unterbrechung der Ausführung des Verfahrens, geändert werden. Die Veränderung des mindestens einen Winkelparameters des mindestens einen Raumwinkels kann kontinuierlich, insbesondere nahezu kontinuierlich mittels Winkelstufen kleiner als 5° oder kleiner als 10°, oder diskret, z.B. durch zwei oder drei Schritte, z.B. größer als 20° ausgestaltet sein.

Das bedeutet, dass in einer Umgebung und/oder Verkehrssituation eine grafische Botschaft, z.B. im Raumwinkel von - 20° bis - 35° zur Längsachse zu sehen ist, eine andere grafische Botschaft aber nur im Raumwinkel von -10° bis + 10° zur Längsachse des Fahrzeugs zu sehen ist. Bei einer Änderung der Verkehrssituation ändern sich auch die Winkeln und/oder andere oben beschriebene Anzeigeparameter. Dies für jede der grafischen Botschaften (bei Bedarf auch unabhängig voneinander). Der Begriff "mit Mitteln des Fahrzeugs" beinhaltet auch einen Empfang einer Car2X-Information durch das Fahrzeug und die Berücksichtigung dieser Information bei der Ermittlung der Winkel bzw. Raumteile, in die die unterschiedlichen grafischen Botschaften abgesetzt werden.

Besonders vorteilhaft ist dabei eine Ausgestaltung bei der zusätzlich mit Mitteln des Fahrzeugs die Richtungen oder Raumteile bestimmt werden, in welche diese zumindest zwei grafischen Botschaften angezeigt werden.

In einer Weiterbildung beinhaltet zumindest eine graphische Botschaft eine, insbesondere als Bildfolge dargestellte Information, die zumindest: eine Aktionsaufforderung für den ersten beziehungsweise zweiten Verkehrsteilnehmer, und/oder eine Vorankündigung einer eigenen Aktion oder eines möglichen Vorhabens, und/oder eine Informationsmitteilung für den ersten beziehungsweise zweiten Verkehrsteilnehmer beinhaltet.

Der Inhalt der grafischen Botschaften kann z.B. sein: Einladung zum Spurwechseln; Vorabankündigungen über das Vorhaben des Fahrzeugs; Geschwindigkeitsangaben; Spezielles Warnzeichen mit Erklärung des Warngrundes; Mitteilung über eine Auffälligkeit am Nachbarfahrzeug, z.B. Text "Licht?"; So kann z.B. ein Informationshinweis "Baby am Bord" nur dann und nur in eine bestimmte Richtung durch eine sonst verdunkelte Oberfläche erscheinen, wenn aus dieser Richtung ein anderen Fahrzeug sich zu schnell nähert bzw. überholt.

Das Verfahren kann auch beim Stillstand des Fahrzeugs und bei Bus-Sleep angewandt. So können Begrüßungsbotschaften beim Schließen/Öffnen in Richtung des Funkschlüssels abgegeben werden. Auch ein geparktes Fahrzeug wird besser von den möglichen Rämplern geschützt, wenn es z.B. ein Parkzeichen oder eine andere situationsabhängige grafische Botschaft in Richtung aus der die Fahrzeuge kommen zeigt.

In einer Weiterbildung wird zumindest eine graphische Botschaften nach außen angezeigt, die im Wesentlichen nur aus einem vorausbestimmten Raumwinkel sichtbar ist, dadurch gekennzeichnet, dass der Raumwinkel sich in Abhängigkeit von den vorausbestimmten Kriterien in zumindest in einem Winkelparameter verändert.

In einer Weiterbildung ist der Inhalt und/oder zeitliche Sequenz einer graphischen Botschaft abhängig von der automatisch ermittelten Sichtbarkeit eines Verkehrsteilnehmers für den Fahrer des Fahrzeugs, wobei die Sichtbarkeit unter Berücksichtigung einer der folgenden Parameter ermittelt wird: Einstellung von Spiegelpositionen und/oder der Kamerasysteme des Fahrzeugs; eine zumindest teilweise Verdeckung des Verkehrsteilnehmers, insbesondere hinter den Säulen des Fahrzeugs und/oder hinter weiteren Objekten in der Umgebung des Fahrzeugs.

In einer Weiterbildung ist die Anzeige der zumindest einen graphischen Botschaft im Bezug auf den Raumwinkel und/oder Inhalt der graphischen Botschaft abhängig von dem mit Mitteln des Fahrzeugs erfassen Fahrerzustands und/oder einer Fahreraufmerksamkeit und/oder Fahrerblickrichtung. Ein Fahrzeug, welches sich zum Beispiel im Blind-Spot befindet, bekommt die grafische Botschaft mehr oder minder früh oder spät, mehr oder minder intensiv je nachdem ob der eigene Fahrer bereits in den entsprechenden Spiegel geschaut hat.

In einer Variante wird zumindest eine graphische Botschaft insbesondere an sich zumindest aus einem Raumwinkel dreidimensional angezeigt. Dies ist insbesondere vorteilhaft bei der Anzeige komplexer Verkehrssituationen, räumlicher Zusammenhänge oder Informationen, die mittels räumlicher Zusammenhänge veranschaulicht werden.

In einer Weiterbildung sind zumindest zwei Raumwinkel durch so weit auseinanderliegende Winkelparameter gekennzeichnet, dass ein Mensch die in diese Raumwinkel angezeigten graphischen Botschaften im Abstand von 2m vom Fahrzeug ohne Hilfsmittel nicht beide gleichzeitig sehen kann.

In einer anderen Weiterbildung ist die zumindest in einem Raumwinkel angezeigte graphische Botschaft nur in einem bestimmten, zumindest aus einer Richtung angezeigten, Entfernungsbereich sichtbar.

Somit wird die grafische Botschaft lediglich in einem bestimmten Entfernungsbereich von/bis z.B. 10 Meter, 20 Meter, 50 Meter vom Fahrzeug scharf abgebildet. Im anderen Entfernungsbereichen kann die grafische Botschaft nur in einer z.B. wesentlich reduzierten Form erscheinen. Insbesondere kann eine grafische Botschaft eine derartige Zusammensetzung hoher und tiefer Ortsfrequenzen beinhalten, dass diese je nach Beobachtungsabstand als wesentlich unterschiedliche grafische Botschaften wahrgenommen wird. Eine ähnliche Wirkung auf den Beobachter ist in einem völlig anderen Kontext bekannt, z.B. von einigen Gemälden von Salvador Dali. Diese lassen je nach Beobachtungsentfernung unterschiedliche Inhalte erscheinen.

Vorteilhafterweise lässt sich dies mit Mitteln der Strahlenbrechung, insbesondre einer Fokussierung, realisieren. Durch den Schärfeverlust ist diese außerhalb dieser Bereiche nicht mehr vollumfänglich sichtbar und somit verliert oder verändert die Grafik zumindest einen wesentlichen Teil der Information.

Es kann eine Interaktion mit einem Benutzer vorgesehen sein, insbesondere dem Fahrer eines Fahrzeugs. Diese kann auch derart gestaltet sein, dass die Richtung in welche eine grafische Botschaft angezeigt werden soll vom Benutzer, insbesondere aus einer automatisch erzeugten Vorauswahl, wählbar ist. In einer Weiterbildung dieses Verfahrens kann der Benutzer sogar einzelne Verkehrsteilnehmer auswählen für die der Hinweis angezeigt werden soll. Dies kann z.B. mittels eines Bildschirms erfolgen, auf dem eine zumindest schematisch abgebildete Fahrzeugumgebung und/oder Fahrzeug dargestellt wird, sodass der Benutzer, z.B. mittels eines Drehknopfs oder mittels der Touchscreenfunktion des Bildschirms oder mittels einer Gestiksteuerung eine oder mehrere anzuzeigenden grafischen Botschaften auswählen kann, die insbesondere in eine bestimmte Richtung relativ zum eigenen Fahrzeug oder explizit in Richtung einer bestimmten Fahrspur oder eines bestimmten Verkehrsteilnehmers angezeigt werden soll.

In einem anderen Aspekt umfasst eine Vorrichtung zur richtungsabhängigen Signalisierung insbesondere durch ein Fahrzeug: Eine Anzeige, die dazu eingerichtet ist zwei oder mehrere graphische Botschaften vom selben Fahrzeugbereich nach au-βen; wobei für jede graphische Botschaft ein Raumwinkel existiert, aus dem nur die jeweilige grafische Botschaft sichtbar ist, nicht aber die andere beziehungsweise anderen grafischen Botschaften; wobei sich die Raumwinkel der graphischen zumindest in einem Winkelparameter unterscheiden. Die Anwendung des Verfahrens auf ein Kraftfahrzeug ist auch deswegen vorteilhaft, weil moderne Kraftfahrzeuge über die notwendige Infrastruktur zur Umsetzung des Verfahrens verfügen und der wirtschaftliche Nutzen der hier beschriebenen Ausgestaltungsvarianten im Straßenverkehr besonders hoch ist.

Ein anderer Aspekt umfasst auch eine Recheneinheit zur Ausführung eines der oben dargestellten Verfahren sowie das Fahrzeug, in dem das entsprechende Verfahren ausgeführt wird. Es kann auch ein Computerprogramm, ein Computerprogrammprodukt mit einem Datenträger mit Programmcode und/oder einem ausführbaren Programm bereitgestellt werden, der bzw. das dazu ausgebildet ist, das beschriebene Verfahren durchzuführen, wenn der Programmcode bzw. das ausführbare Programm auf einer entsprechend ausgebildeten Recheneinheit ausgeführt wird. Ebenfalls offenbart wird ein Produkt, das nachtäglich ins Fahrzeug eingebaut wird oder am Fahrzeug befestigt wird, und insbesondere die Fahrzeuginfrastruktur (Stromversorgung, Daten, Signale) nutzt und dazu eingerichtet ist, eines der oben beschriebenen Verfahren auszuführen.

Bei einer vorteilhaften Ausgestaltung des Verfahrens wird die Anzeigevorrichtung auf die Bekleidung eines Motorradfahrers befestigt oder ist als ein Teil dieser Bekleidung ausgestaltet. Bei der Darstellung der grafischen Botschaften wird dabei auch die relative Position des Motorradfahrers am Fahrzeug berücksichtigt. Somit kann das Verfahren auch bei Bewegungen des Motorradfahrers auf seinem Fahrzeug, die sensorisch erfasst werden, eine optimale Funktion im Sinne der obigen Verfahren und Vorrichtungen erreicht werden.

### KURZE BESCHREIBUNG DER ZEICHNUNGEN

Fig. 1 zeigt schematisch ein Fahrzeug mit einer Anzeige gemäß einem Ausführungsbeispiel für zwei Blickrichtungen.
Fig. 2 zeigt schematisch das Fahrzeug mit der Anzeige gemäß dem Ausführungsbeispiel für drei Blickrichtungen.
Fig. 3 zeigt schematisch ein Fahrzeug mit einer Anzeige gemäß dem Ausführungsbeispiel für drei Blickrichtungen.
Fig. 4 zeigt schematisch eine Darstellung in einer Blickrichtung gemäß einem weiteren Ausführungsbeispiel.

Gleiche Bezugszeichen bezeichnen sich entsprechende Elemente über die Figuren hinweg.

### DETAILLIERTE BESCHREIBUNG DER AUSFÜHRUNGSBEISPIELE

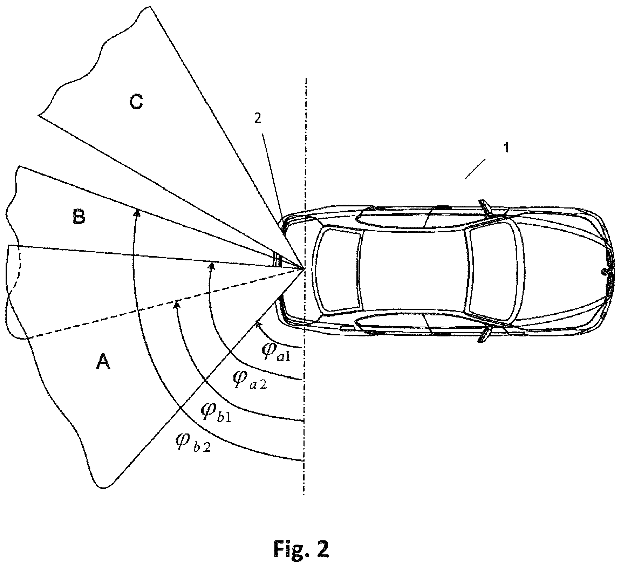

Fig. 2 zeigt schematisch das Fahrzeug 1, dessen am Heck angeordnete Anzeige 2 dazu konfiguriert ist, drei grafischen Botschaften anzuzeigen. Eine erste grafische Botschaft wird für Blickrichtungen im Raumwinkel von **ϕₐ₁** bis **ϕₐ₂** angezeigt. Der Bereich an Blickrichtungen, aus denen die erste grafische Botschaft sichtbar ist, ist in Fig. 2 mit "A" bezeichnet. Eine zweite grafische Botschaft wird für Blickrichtungen im Raumwinkel von **ϕ_{b1}** bis **ϕ_{b2}** angezeigt. Der Bereich an Blickrichtungen, aus denen die erste grafische Botschaft sichtbar ist, ist in Fig. 2 mit "B" bezeichnet. Entsprechendes gilt für eine dritte grafische Botschaft, die im Bereich an Blickrichtungen sichtbar ist, der in Fig. 2 mit "C" bezeichnet ist. Wie aus Fig. 2 ersichtlich, überschneiden sich die Bereiche "A" und "B", was bedeutet, dass bei Blickrichtungen in der Überschneidung sowohl die erste als auch die zweite grafische Botschaft sichtbar ist. Die Raumwinkel werden von der zur Längsachse vertikalen Ebene, deren Schnitt in Fig. 2 gestrichelt eingezeichnet ist, gemessen.

Bei dieser Ausführung des Verfahren zur richtungsabhängigen Signalisierung wird eine erste grafische Botschaft derart von einem Fahrzeugbereich nach außen angezeigt, dass diese vollständig nur aus einem ersten Raumwinkel sichtbar ist und eine zweite grafische Botschaft derart von dem selben Fahrzeugbereich nach außen angezeigt wird, dass diese vollständig nur aus einem zweiten Raumwinkel sichtbar ist und eine dritte grafische Botschaft von dem selben Fahrzeugbereich nach außen angezeigt wird, dass diese vollständig nur aus einem dritten Raumwinkel sichtbar ist, wobei sich der erste, der zweite und der dritte Raumwinkel jeweils voneinander unterscheiden.

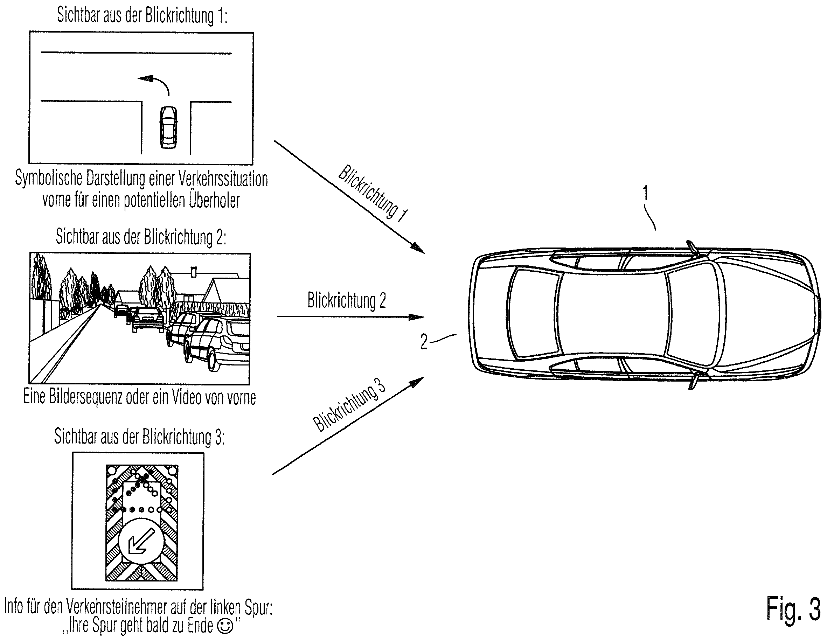

Fig. 3 zeigt eine schematische Ansicht des Fahrzeugs 1 mit beispielhaften Ansichten aus drei Blickrichtungen. Die erste Blickrichtung ("Blickrichtung 1") liegt im Bereich "C" der in Fig. 2 gezeigten Blickrichtungsbereiche. Die zweite Blickrichtung ("Blickrichtung 2") liegt im Bereich "B" der in Fig. 2 gezeigten Blickrichtungsbereiche. Die dritte Blickrichtung ("Blickrichtung 3") liegt im Bereich "A" der in Fig. 2 gezeigten Blickrichtungsbereiche. Weder Blickrichtung 2 noch Blickrichtung 3 befinden sich im Überlappungsbereich von "A" und "B". Somit sehen sich in Blickrichtung 2 und Blickrichtung 3 befindliche andere Verkehrsteilnehmer nur die in ihrer jeweiligen Blickrichtung angezeigten grafischen Botschaften.

Ein Verkehrsteilnehmer, der sich in Blickrichtung 1 befindet, kann auf der Anzeige 2 die schematische Darstellung der Verkehrssituation und die Intention des Fahrzeugs 2 erkennen. Dazu bereitet das Fahrzeug 1 Daten aus der Umfeldsensorik und dem Navigationssystem derart auf, dass eine schematische Darstellung entsteht. Die Darstellung der Situation als Schema ermöglicht dem anderen Verkehrsteilnehmer die schnelle Erfassung. Die Zuordnung der Darstellung der Verkehrssituation zur Blickrichtung 1, also nach schräg links hinten vom Fahrzeug 1 aus gesehen, berücksichtigt, dass sich in dieser Position typischerweise andere Verkehrsteilnehmer befinden, die das Fahrzeug 2 überholen möchten. Gerade für diese Verkehrsteilnehmer ist die Darstellung der Intention des Fahrzeugs 1 und des Umfelds von Nutzen. Im vorliegenden Beispiel wird angezeigt, dass das Fahrzeug 1 links abbiegen wird, was bedeuten würde, dass die Gefahr einer Kollision mit dem überholenden Verkehrsteilnehmer besteht. Die Anzeige einer schematischen Übersicht in der Blickrichtung 1 hilft, einen Unfall zu vermeiden.

In der Blickrichtung 2 wird ein Video der Ansicht vor dem Fahrzeug 2 gezeigt. Diese kann zur schnelleren Wahrnehmung oder der besseren Darstellbarkeit auf der Anzeige 2 abgewandelt werden. Kanten können hervorgehoben werden und Texturen durch Standardtexturen ersetzt werden. Gerade für einen dem Fahrzeug 2 folgenden Verkehrsteilnehmer ist die Ansicht der Straße und vorderen Umgebung vor dem Fahrzeug 2 hilfreich. Das Fahrzeug 2 versperrt nämlich den Blick auf die vordere Umgebung für den Nachfolgenden. Die Kenntnis der vorderen Umgebung des Fahrzeugs 2 ermöglicht ein vorausschauenderes Fahren und motiviert gegebenenfalls bereits mehr Abstand zum Fahrzeug 2 einzuhalten.

Aus der Blickrichtung 1 kann ein typisches Verkehrsschild, das das Ende der Fahrspur anzeigt gesehen werden. Die Situation, dass die Fahrspur rechts des Fahrzeugs 1 zu Ende geht kann mithilfe der Umfeldsensorik und gegebenenfalls einer Car2Infrastructure Kommunikation erkannt werden. Diese Darstellung des Verkehrsschildes wird an schräg rechts hinter dem Fahrzeug 1 fahrende Verkehrsteilnehmer angezeigt. Diese betrifft die Information, dass die Fahrspur rechts des Fahrzeugs endet besonders.

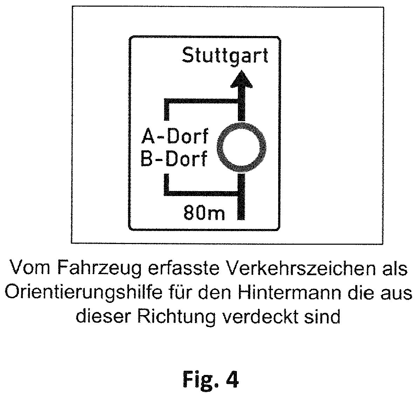

Fig. 4 zeigt eine aufbereitete Darstellung von Verkehrszeichen, die vom Fahrzeug erfasst werden, als Orientierungshilfe für einen sich hinter dem Fahrzeug 2 befindlichen Verkehrsteilnehmer. Dies ist insbesondere dann hilfreich, wenn die Verkehrszeichen für den hinteren Verkehrsteilnehmer verdeckt sind. Die in Fig. 4 gezeigte Darstellung kann beispielsweise in der ersten, zweiten oder dritten Blickrichtung angezeigt werden.

Die grafischen Botschaften können an sich dreidimensional dargestellt werden. Diese können zumindest teilweise, aus der Blickrichtung des Beobachters, als innerhalb oder außerhalb der physikalischen Fahrzeugoberfläche befindlich erscheinen. Ein Vorteil einer grafischen Botschaft, die sich in der Wahrnehmung des Beobachters zumindest teilweise außerhalb der Fahrzeugoberfläche befindet, besteht auch darin, dass:
- die wahrgenommenen Abmessungen des Fahrzeugs bei der Darstellung einer grafischen Botschaft in eine oder mehrere Richtungen größer erscheinen, ohne dass das Fahrzeug physikalisch eine solche Größe haben muss. Dies verringert auch den vom Beobachter wahrgenommenen Sicherheitsabstand, insbesondere wenn eine grafische Botschaft dergestalt dargestellt wird, dass der Beobachter, z.B. früher bremsen oder besser ausweichen wird und mit einer höheren Wahrscheinlichkeit eine Kollision mit dem Fahrzeug vermeidet.

Ein Vorteil einer grafischen Botschaft, die sich in der Wahrnehmung des Beobachters zumindest teilweise innerhalb der Fahrzeugoberfläche befindet, besteht auch darin, dass:
- eine bessere Gestaltungsmöglichkeit besteht, einen Unterschied in der wahrgenommenen Tiefe für die Darstellung der Information darzustellen.
- Gestaltungsmöglichkeit für die Darstellung diverser Formen und/oder das Design der grafischen Botschaft als solche.

Im Falle einer an sich räumlich wahrgenommen grafischen Botschaft kann ein Teil der Anzeige innerhalb der physischen Oberfläche und ein anderer Teil außerhalb der physischen Oberfläche des Fahrzeugs erscheinen. Im Falle der Darstellung einer an sich flach, aber räumlich angeordneten grafischen Botschaft besteht die Möglichkeit diese in einem optimalen Winkel zur Blickrichtung darzustellen. Diese Variante ist auch mit einem geringen Aufwand realisierbar.

## Patentansprüche

1. Verfahren zur richtungsabhängigen Signalisierung durch ein Fahrzeug umfassend:
Anzeigen von zwei oder mehreren graphischen Botschaften von demselben Fahrzeugbereich nach außen;
wobei jeder der graphischen Botschaften ein Raumwinkel zugeordnet ist, aus dem nur die jeweilige grafische Botschaft sichtbar ist, nicht aber die andere beziehungsweise anderen grafischen Botschaften;
wobei sich die Raumwinkel zumindest in einem Winkelparameter unterscheiden;
**dadurch gekennzeichnet, dass** zumindest eine der graphischen Botschaften aufbauend auf einer mit Mitteln des Fahrzeug erfassten Umgebungskarte erstellt wird beziehungsweise werden; und/oder
zumindest eine der graphischen Botschaften aufbauend auf einer aus der Umgebung des Fahrzeugs aufgenommenen Bildfolge erstellt wird beziehungsweise werden,
wobei die zumindest eine Bildfolge oder Umgebungskarte mit Mitteln der Bildverarbeitung aufbereitet wird.

2. Verfahren nach Anspruch 1, wobei sich zumindest zwei der graphischen Botschaften zumindest teilweise in ihrem Inhalt oder dem Zeitraum, in dem sie angezeigt werden, unterscheiden.

3. Verfahren nach einem der vorhergehenden Ansprüche, wobei sich zumindest zwei der graphischen Botschaften in der Größe, in der sie angezeigt werden, in den Proportionen und/oder in den Proportionen von Einzelteilen der grafischen Botschaften voneinander unterscheiden.

4. Verfahren nach einem der vorhergehenden Ansprüche, wobei eine oder mehrere grafischen Botschaften, ein Symbol, Text, Kontur, insbesondere Objektkontur, eine oder mehrere mit einer oder mehreren Texturen gefüllte Fläche oder Flächen, umfassen.

5. Verfahren nach einem der vorhergehenden Ansprüche, wobei das Anzeigen mithilfe einer Anzeige ausgeführt wird, die Mikroprismen, Mikrolinsen oder lentikuläre optische Elemente umfasst.

6. Verfahren nach einem der vorhergehenden Ansprüche, bei dem das Anzeigen der grafischen Botschaften die lokale Veränderung der Reflexionseigenschaften und/oder Absorptionseigenschaften und/oder Interferenzeigenschaften des, insbesondere des aus Richtung des Raumwinkels, einfallenden Lichts umfasst.

7. Verfahren nach einem der vorhergehenden Ansprüche, wobei mindestens zwei der graphischen Botschaften an derselben Position im Raum erscheinen, die insbesondere nicht mit der Fahrzeugoberfläche übereinstimmt.

8. Verfahren nach einem der vorangegangenen Ansprüche, derart ausgestaltet, dass zumindest ein Raumwinkel sich, insbesondere während der Ausführung des Verfahrens, zumindest in einem Winkelparameter verändert, insbesondere in Abhängigkeit von der Bestimmung der Winkelparameter mit Mitteln des Fahrzeugs.

9. Verfahren nach einem der vorhergehenden Ansprüche, wobei zumindest eine der graphischen Botschaften eine, insbesondere als Bildfolge dargestellte Information beinhaltet, die zumindest:
eine Aktionsaufforderung für den ersten beziehungsweise zweiten Verkehrsteilnehmer, und/oder
eine Vorankündigung einer eigenen Aktion oder eines möglichen Vorhabens, und/oder
eine Informationsmitteilung für den ersten beziehungsweise zweiten Verkehrsteilnehmer beinhaltet.

10. Verfahren nach einem der vorhergehenden Ansprüche, bei dem zumindest eine graphische Botschaft nach außen angezeigt wird, die im Wesentlichen nur aus einem vorausbestimmten Raumwinkel sichtbar ist, wobei sich der Raumwinkel in Abhängigkeit von den vorausbestimmten Kriterien in zumindest einem Winkelparameter verändert.

11. Verfahren nach einem der vorhergehenden Ansprüche, bei dem:
Der Inhalt und/oder die zeitliche Sequenz einer der graphischen Botschaften abhängig von der automatisch ermittelten Sichtbarkeit eines Verkehrsteilnehmers für den Fahrer des Fahrzeugs abhängt, wobei die Sichtbarkeit unter Berücksichtigung einer der folgenden Parameter ermittelt wird:
Einstellung von Spiegelpositionen und/oder der Kamerasysteme des Fahrzeugs;
eine zumindest teilweise Verdeckung des Verkehrsteilnehmers, insbesondere hinter den Säulen des Fahrzeugs und/oder hinter weiteren Objekten in der Umgebung des Fahrzeugs.

12. Verfahren nach einem der vorhergehenden Ansprüche, wobei der Raumwinkel und/oder der Inhalt jeder graphischen Botschaft abhängig von dem mit Mitteln des Fahrzeugs erfassten Fahrerzustand und/oder einer Fahreraufmerksamkeit und/oder Fahrerblickrichtung bestimmt wird.

13. Verfahren nach einem der vorhergehenden Ansprüche, wobei zumindest eine der graphischen Botschaften an sich zumindest aus einem Raumwinkel dreidimensional angezeigt wird.

14. Verfahren nach einem der vorhergehenden Ansprüche, wobei zumindest zwei Raumwinkel durch so weit auseinanderliegende Winkelparameter gekennzeichnet sind, dass ein Mensch die angezeigten graphischen Botschaften im Abstand von 2m vom Fahrzeug ohne Hilfsmittel nicht beide gleichzeitig sehen kann.

15. Verfahren nach einem der vorangegangenen Ansprüche, wobei die jeweilige zumindest in einem Raumwinkel angezeigte graphische Botschaft nur in einem bestimmten, zumindest aus einer Richtung angezeigten, Entfernungsbereich sichtbar ist.

16. Vorrichtung zur richtungsabhängigen Signalisierung durch ein Fahrzeug unter Verwendung eines Verfahrens nach Anspruchs 1, umfassend:
Eine Anzeige, die dazu eingerichtet ist zwei oder mehrere graphische Botschaften vom selben Fahrzeugbereich nach außen anzuzeigen;
wobei jeder graphischen Botschaft ein Raumwinkel zugeordnet ist, aus dem nur die jeweilige grafische Botschaft sichtbar ist, nicht aber die andere beziehungsweise anderen grafischen Botschaften;
wobei sich die Raumwinkel der graphischen Botschaften zumindest in einem Winkelparameter unterscheiden;
**dadurch gekennzeichnet, dass** die Vorrichtung Mittel umfasst, die angepasst sind, eine Umgebungskarte zu erfassen und/oder eine Bildfolge aus der Umgebung des Fahrzeugs aufzunehmen, wobei zumindest eine der graphischen Botschaften aufbauend auf der mit den Mitteln erfassten Umgebungskarte erstellt wurde, und/oder wobei zumindest eine der graphischen Botschaften aufbauend auf der mit den Mitteln aufgenommenen Bildfolge der Umgebung des Fahrzeugs erstellt wurde,
wobei die zumindest eine Bildfolge oder Umgebungskarte mit Mitteln der Bildverarbeitung aufbereitet wurde.

17. Vorrichtung nach Anspruch 16, wobei die Vorrichtung dazu eingerichtet ist, ein Verfahren nach einem der Ansprüche 2 bis 15 auszuführen.

18. Fahrzeug umfassend eine Vorrichtung nach einem der Ansprüche 16 oder 17.

## Claims

1. Method for direction-dependent signalling by a vehicle, comprising:
display of two or more graphical messages from the same vehicle region to the outside;
wherein each of the graphical messages has an associated spatial angle from which only the respective graphical message is visible, but not the other graphical message(s);
wherein the spatial angles differ at least in one angle parameter;
**characterized in that** at least one of the graphical messages is/are created on the basis of a map of the surroundings that is captured using means of the vehicle; and/or
at least one of the graphical messages is/are created on the basis of an image sequence that is recorded from the surroundings of the vehicle,
wherein the at least one image sequence or map of the surroundings is conditioned using image processing means.

2. Method according to Claim 1, wherein at least two of the graphical messages differ at least to some extent in their content or in the period in which they are displayed.

3. Method according to either of the preceding claims, wherein at least two of the graphical messages differ from one another in the size in which they are displayed, in the proportions and/or in the proportions of component parts of the graphical messages.

4. Method according to one of the preceding claims, wherein one or more graphical messages comprise a symbol, text, contour, in particular object contour, one or more area(s) filled with one or more textures.

5. Method according to one of the preceding claims, wherein the display is carried out using a display that comprises microprisms, microlenses or lenticular optical elements.

6. Method according to one of the preceding claims, in which the display of the graphical messages comprises the local alteration in the reflection properties and/or absorption properties and/or interference properties of the incident light, in particular the light that is incident from the direction of the spatial angle.

7. Method according to one of the preceding claims, wherein at least two of the graphical messages appear at the same position in space, which position in particular does not correspond to the vehicle surface.

8. Method according to one of the preceding claims, embodied such that at least one spatial angle alters, in particular while the method is being carried out, at least in one angle parameter, in particular on the basis of the determination of the angle parameters using means of the vehicle.

9. Method according to one of the preceding claims, wherein at least one of the graphical messages contains an information item, in particular presented as an image sequence, that contains at least:
a call for action for the first or second road user and/or
a prior announcement of an action of its own or of a possible intention and/or
an information notification for the first or second road user.

10. Method according to one of the preceding claims, in which at least one graphical message is displayed to the outside, said message being visible essentially only from a predetermined spatial angle, wherein the spatial angle alters in at least one angle parameter on the basis of the predetermined criteria.

11. Method according to one of the preceding claims, in which:
the content and/or the time sequence of one of the graphical messages is dependent on the automatically ascertained visibility of a road user to the driver of the vehicle, the visibility being ascertained by taking account of one of the following parameters:
setting of mirror positions and/or of the camera systems of the vehicle;
at least partial concealment of the road user, in particular behind the pillars of the vehicle and/or behind other objects in the surroundings of the vehicle.

12. Method according to one of the preceding claims, wherein the spatial angle and/or the content of each graphical message is determined on the basis of the driver condition captured using means of the vehicle and/or on the basis of a driver alertness and/or driver line of vision.

13. Method according to one of the preceding claims, wherein at least one of the graphical messages is per se displayed in three dimensions at least from one spatial angle.

14. Method according to one of the preceding claims, wherein at least two spatial angles are denoted by angle parameters that are so far apart that a human being cannot simultaneously see both of the displayed graphical messages at a distance of 2 m from the vehicle without any aids.

15. Method according to one of the preceding claims, wherein the respective graphical message displayed at least at one spatial angle is visible only at a specific distance range that is indicated at least from one direction.

16. Apparatus for direction-dependent signalling by a vehicle by using a method according to Claim 1, comprising:
a display that is designed to display two or more graphical messages from the same vehicle region to the outside;
wherein each graphical message has an associated spatial angle from which only the respective graphical message is visible, but not the other graphical message(s) ;
wherein the spatial angles of the graphical messages differ at least in one angle parameter,
**characterized in that** the apparatus comprises means that are adapted to capture a map of the surroundings and/or to record an image sequence from the surroundings of the vehicle, wherein at least one of the graphical messages was created on the basis of the map of the surroundings captured using the means, and/or wherein at least one of the graphical messages was created on the basis of the image sequence of the surroundings of the vehicle recorded using the means,
wherein the at least one image sequence or map of the surroundings was conditioned using image processing means.

17. Apparatus according to Claim 16, wherein the apparatus is designed to carry out a method according to one of Claims 2 to 15.

18. Vehicle comprising an apparatus according to either of Claims 16 and 17.

## Revendications

1. Procédé de signalisation directionnelle par un véhicule, comprenant les étapes consistant à :
afficher deux ou plusieurs messages graphiques depuis la même zone de véhicule vers l'extérieur ;
un angle solide étant associé à chacun des messages graphiques sous lequel seul le message graphique respectif est visible mais pas le ou les autres messages graphiques ;
les angles solides se distinguant au moins par un paramètre d'angle ;
**caractérisé en ce qu'**un moins l'un des messages graphiques est créé sur la base d'une carte d'environnement détectée par des moyens du véhicule ; et/ou
au moins l'un des messages graphiques est créé sur la base d'une série d'images enregistrée à partir de l'environnement du véhicule, ladite au moins une série d'images ou la carte d'environnement étant éditée par des moyens de traitement d'image.

2. Procédé selon la revendication 1, dans lequel au moins deux des messages graphiques se distinguent au moins en partie par leur contenu ou par la période de temps pendant laquelle ils sont affichés.

3. Procédé selon l'une quelconque des revendications précédentes, dans lequel au moins deux des messages graphiques se distinguent les uns des autres par la dimension à laquelle ils sont affichés, par les proportions et/ou par les proportions de parties individuelles des messages graphiques.

4. Procédé selon l'une quelconque des revendications précédentes, dans lequel un ou plusieurs messages graphiques comprennent un symbole, du texte, un contour, en particulier un contour d'objet, une ou plusieurs surfaces remplies d'une ou plusieurs textures.

5. Procédé selon l'une quelconque des revendications précédentes, dans lequel l'affichage est effectué à l'aide d'un dispositif d'affichage qui comprend des microprismes, des microlentilles ou des éléments optiques lenticulaires.

6. Procédé selon l'une quelconque des revendications précédentes, dans lequel l'affichage des messages graphiques comprend le changement local des propriétés de réflexion et/ou des propriétés d'absorption et/ou des propriétés d'interférence, en particulier de la lumière incidente à partir de la direction de l'angle solide.

7. Procédé selon l'une quelconque des revendications précédentes, dans lequel au moins deux des messages graphiques apparaissent dans la même position dans l'espace qui ne coïncide en particulier pas avec la surface du véhicule.

8. Procédé selon l'une quelconque des revendications précédentes, configuré de telle sorte qu'au moins un angle solide change en particulier pendant l'exécution du procédé au moins au niveau d'un paramètre d'angle, en particulier en fonction de la détermination des paramètres d'angle par des moyens du véhicule.

9. Procédé selon l'une quelconque des revendications précédentes, dans lequel au moins l'un des messages graphiques contient une information représentée en particulier sous la forme d'une série d'images qui contient au moins :
un appel à l'action pour le premier ou le deuxième usager de la route respectivement, et/ou un avertissement d'une action propre ou d'une intention possible, et/ou
une communication d'information pour le premier ou le deuxième usager de la route respectivement.

10. Procédé selon l'une quelconque des revendications précédentes, dans lequel au moins un message graphique est affiché vers l'extérieur qui n'est visible substantiellement qu'à partir d'un angle solide prédéterminé, l'angle solide changeant au niveau d'au moins un paramètre d'angle en fonction des critères prédéterminés.

11. Procédé selon l'une quelconque des revendications précédentes, dans lequel :
le contenu et/ou la séquence temporelle d'un des messages graphiques dépendent de la visibilité établie automatiquement d'un usager de la route pour le conducteur du véhicule, la visibilité étant établie en tenant compte d'un des paramètres suivants :
d'un réglage des positions de rétroviseurs et/ou des systèmes de caméra du véhicule ;
d'une occultation au moins partielle de l'usager de la route, en particulier derrière les montants du véhicule et/ou derrière d'autres objets dans l'environnement du véhicule.

12. Procédé selon l'une quelconque des revendications précédentes, dans lequel l'angle solide et/ou le contenu de chaque message géographique sont déterminés en fonction de l'état du conducteur et/ou d'une vigilance du conducteur et/ou d'une direction du regard du conducteur, détectés par des moyens du véhicule.

13. Procédé selon l'une quelconque des revendications précédentes, dans lequel au moins l'un des messages graphiques est affiché en tant que tel en trois dimensions au moins à partir d'un angle solide.

14. Procédé selon l'une quelconque des revendications précédentes, dans lequel au moins deux angles solides sont **caractérisés par** des paramètres d'angle espacés à tel point qu'une personne ne peut pas voir les messages graphiques affichés tous les deux en même temps à une distance de 2 m du véhicule sans moyen auxiliaire.

15. Procédé selon l'une quelconque des revendications précédentes, dans lequel le message graphique respectif affiché au moins selon un angle solide n'est visible que dans une certaine plage de distance affichée au moins à partir d'une direction.

16. Dispositif de signalisation directionnelle par un véhicule en utilisant un procédé selon la revendication 1, comprenant :
un dispositif d'affichage qui est aménagé pour afficher deux ou plusieurs messages graphiques depuis la même zone de véhicule vers l'extérieur ;
un angle solide étant associé à chaque message graphique sous lequel seul le message graphique respectif est visible mais pas le ou les autres messages graphiques ;
les angles solides des messages graphiques se distinguant au moins par un paramètre d'angle ;
**caractérisé en ce que** le dispositif comprend des moyens qui sont adaptés pour détecter une carte d'environnement et/ou pour enregistrer une série d'images provenant de l'environnement du véhicule, dans lequel au moins l'un des messages graphiques a été créé sur la base de la carte d'environnement détectée par les moyens, et/ou dans lequel au moins l'un des messages graphiques a été créé sur la base de la série d'images de l'environnement du véhicule, enregistrée par les moyens, ladite au moins une série d'images ou la carte d'environnement ayant été éditée par des moyens de traitement d'image.

17. Dispositif selon la revendication 16, dans lequel le dispositif est aménagé pour exécuter un procédé selon l'une quelconque des revendications 2 à 15.

18. Véhicule, comprenant un dispositif selon l'une quelconque des revendications 16 ou 17.
